# EUROPEAN PATENT APPLICATION

(11) **EP 2 202 195 A2**
(43) Date of publication of application: **30.06.2010**
(21) Application number: 09180546.5
(22) Date of filing: 23.12.2009
(51) Int. Cl.: B66F 9/075, B60K 13/06

(54) **Industrial vehicle**

(30) Priority: 24.12.2008 JP 2008328546
(71) Applicant: Kabushiki Kaisha Toyota Jidoshokki, Kariya-shi, Aichi 448-8671 (JP)
(72) Inventor: Nakashima, Hideki, Kariya-shi Aichi 448-8671 (JP)
(74) Representative: TBK-Patent

(57) **Abstract**

An industrial vehicle includes a vehicle body (1), an electric component (13) and a counterweight (10). The electric component of the industrial vehicle is mounted on the vehicle body. The counterweight is mounted on the vehicle body at the rear end and rearward of the electric component. The counterweight has a recess (20) formed extending forwardly of the vehicle body from the rear end surface of the counterweight and an air passage (30) formed extending upwardly of the vehicle body toward the electric component from an opening (30A) formed at the top surface of the recess. The recess has a closed end (20B) at a position forward of the opening of the air passage.

## Description

### BACKGROUND OF THE INVENTION

The present invention relates to an industrial vehicle.

A battery forklift truck is disclosed in Japanese Patent Application Publication No. 1-285424. This battery forklift truck includes a vehicle body, a counterweight mounted to the vehicle body at the rear end thereof and a controller arranged forward of the counterweight for controlling traveling and loading operations of the forklift truck. The counterweight has a recess or a cavity extending forwardly from the rear end surface thereof, and an air passage extending upwardly forwardly from the recess to the controller.

In the battery forklift truck according to the above Publication, fresh ambient air can be supplied to the controller through the air passage, thereby cooling the controller effectively. The air passage which is formed extending upwardly forwardly from the recess protects the controller from being splashed with washing water through the air passage if wash water is sprayed from the rear of the forklift truck for washing. Thus, electric leakage hardly occurs in the controller.

In the above-described conventional industrial vehicle, the air passage is opened at a position in the recess between the top and front surfaces. If the vehicle is washed with strong splashing water, however, a part of the water may enter to flow upward through the air passage to the controller. The controller may be provided with any suitable water-proofing mechanism so as to protect the controller from electrical leakage, but the additional mechanism will raise the manufacturing cost of the vehicle.

The present invention is directed to providing an industrial vehicle having a counterweight mounted on the vehicle body at the rear end thereof and a controller arranged forward of the counterweight, which can prevent electric leakage of the controller effectively without using an additional water-proofing mechanism.

### SUMMARY OF THE INVENTION

In accordance with the present invention, an industrial vehicle includes a vehicle body, a controller and a counterweight. The controller is mounted on the vehicle body for controlling an operation of the industrial vehicle. The counterweight is mounted on the vehicle body at the rear end and rearward of the controller. The counterweight has a recess formed extending forwardly from the rear end surface of the counterweight and an air passage formed extending upwardly toward the controller. The air passage has an opening formed at the top surface of the recess. The recess has a closed end at a position forward of the opening of the air passage.

Other aspects and advantages of the invention will become apparent from the following description, taken in conjunction with the accompanying drawings, illustrating by way of example the principles of the invention.

### BRIEF DESCRIPTION OF THE DRAWINGS

The invention together with objects and advantages thereof, may best be understood by reference to the following description of the presently preferred embodiments together with the accompanying drawings in which:
Fig. 1 is a side view of a battery forklift truck according to a preferred embodiment of the present invention;
Fig. 2 is a fragmentary rear view of the battery forklift truck of Fig. 1;
Fig. 3 is a fragmentary side view of a rear part of the battery forklift truck of Fig. 1; and
Fig. 4 is a sectional view of the rear part of Fig. 3.

### DETAILED DESCRIPTION OF THE PREFERRED EMBODIMENTS

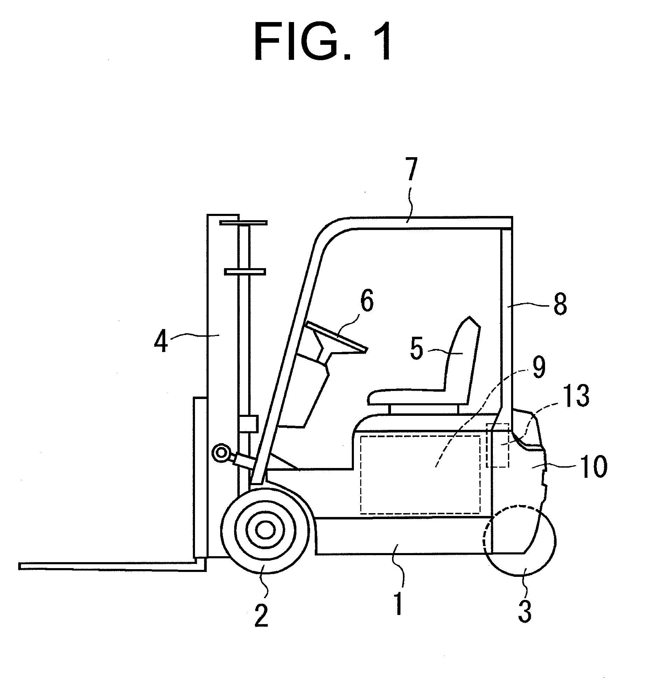

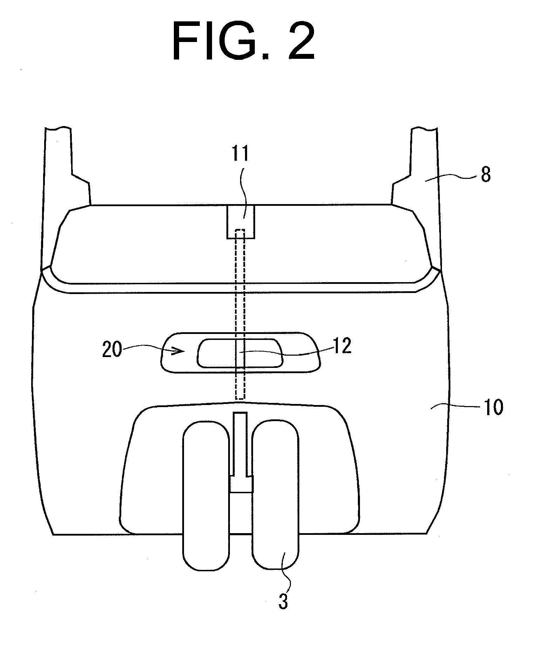

The following will describe a preferred embodiment of the present invention with reference to Figs. 1 through 4. As shown in Figs. 1 and 2, an industrial vehicle according to the preferred embodiment is a three-wheel battery forklift truck.

Referring to Figs. 1 and 2, the battery forklift truck includes a vehicle body 1, a pair of left and right drive wheels 2 arranged at the front of the vehicle body 1 and a steered wheel 3 arranged at the rear center of the vehicle body 1 and having two wheels. The battery forklift includes a mast assembly 4 arranged forward of the vehicle body 1, an operator's seat 5 on the vehicle body 1, a battery case 9 below the operator's seat 5 for storing a battery, a steering wheel 6 forward of the operator's seat 5 and front and rear pillars 7, 8 around the operator's seat 5.

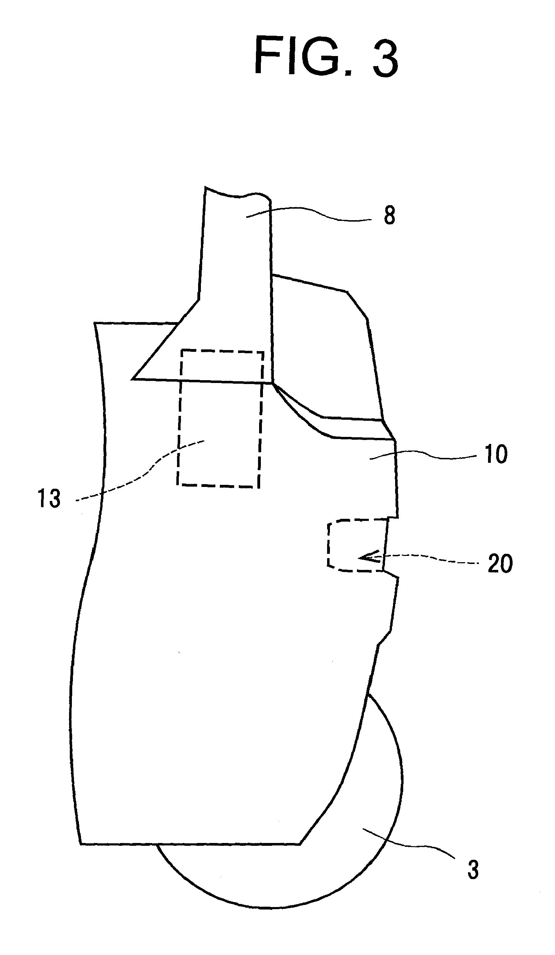

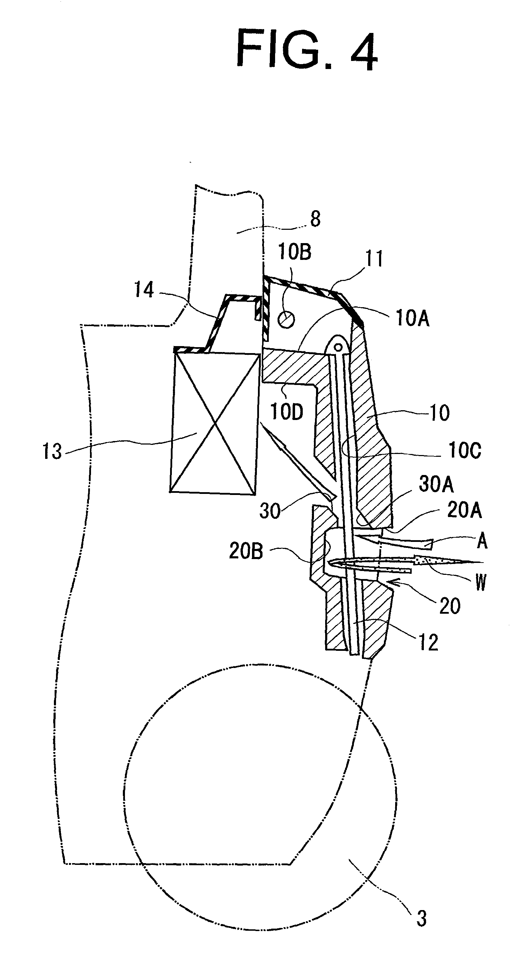

Referring to Figs. 3 and 4, the battery forklift further includes a counterweight 10 having a top surface 10A and mounted on the vehicle body 1 at the rear end thereof. A cap 11 made of a resin material is detachably mounted to the counterweight 10 at the top thereof so as to seal the counterweight 10, as shown in Figs. 2 and 4. Removing the cap 11, the top surface 10A of the counterweight 10 is exposed outside, and the counterweight 10 can be lifted using a lift bar 10B.

As shown in Fig. 4, the top surface 10A of the counterweight 10 is slanted slightly downward toward the rear. This prevents any water flowing to the top surface 10A of the counterweight 10 through any clearance between the cap 11 and the counterweight 10 from flowing to a controller 13 as an electric component for controlling an operation of the buttery forklift truck located forward of the counterweight 10.

The counterweight 10 has a hole 10C formed therethrough extending linearly downwardly from the rear center of the top surface 10A. A drawbar 12 for engaging a hook is suspended in the hole 10C with the top portion thereof engaged with the top surface 10A of the counterweight 10.

A space 10D is formed forward of the counterweight 10, and the controller 13 is arranged forward of the space 10D for controlling traveling and loading operations of the forklift truck and mounted on the vehicle body 1. In other words, the space 10D is formed between the counterweight 10 and the controller 13, or behind the counterweight 10. A cover member 14 is provided above the controller 13 and, with the cover member 14 opened, the controller 13 is removable.

The rear end surface of the counterweight 10 is formed extending substantially vertically. The counterweight 10 has a recess 20 extending substantially horizontally forwardly from the center of the rear end surface thereof. The top surface 20A of the recess 20 extends substantially horizontally. The counterweight 10 further has an air passage 30 formed therein extending upwardly toward the controller 13. The air passage 30 has at the bottom end thereof an opening 30A formed at or opened on the center of the top surface 20A of the recess 20 in the front-and-rear direction of the vehicle body 1, or the air passage 30 is formed extending forwardly upwardly from the opening 30A through the counterweight 10. The recess 20 has a closed end 20B at a position that is forward of the opening 30A.

The hole 10C accommodating therein the drawbar 12 is in communication with the recess 20 through the opening 30A of the air passage 30. The drawbar 12 is exposed outside in the recess 20 or accessible through the recess 20.

According to the battery forklift truck of the present invention, ambient air may flow through the air passage 30 and be supplied to the controller 13, thereby cooling the controller 13 effectively.

The air passage 30 which is formed extending upwardly makes it difficult for washing water W to flow through the air passage 30 if wash water W is sprayed from the rear of the forklift truck for washing. Thus, the controller 13 is protected from electrical leakage.

The air passage 30 has at the bottom end thereof the opening 30A formed at the top surface 20A of the recess 20, and the recess 20 has the closed end 20B at a position that is forward of the opening 30A. Thus, if water W is sprayed strongly against the rear of the forklift truck for washing, the sprayed water W strikes the closed end 20B of the recess 20, and therefore, hardly flows directly into the air passage 30 from the opening 30A. The water W sprayed directly against the closed end 20B is splashed and a part of the splashed water W may flow into the air passage 30 through the opening 30A, but flows down the air passage 30 due to gravity. Thus, the water W hardly passes through the entire air passage 30.

In the battery forklift truck according to the preferred embodiment of the present invention, the drawbar 12 is arranged in the counterweight 10, and the recess 20 is used as a space in which a hook (not shown) is engaged with the drawbar 12. Thus, this structure of the battery forklift truck is utilized effectively.

As is apparent from the foregoing, electric leakage of the controller 13 is prevented effectively without mounting a complete water-proofing mechanism on the controller 13, thereby reducing the manufacturing cost of the battery forklift truck.

In the battery forklift truck, the recess 20 extends substantially horizontally, and the opening 30A of the air passage 30 is formed at the top surface 20A of the recess 20 which is hardly visible from a person standing in a normal posture. That is, the battery forklift truck is advantageous in appearance in that the opening 30A of the air passage 30 for cooling the controller 13 is normally invisible.

The present invention is not limited to the above-described preferred embodiment, but it may be modified in various ways as exemplified below. Thought the present invention is applied to a three-wheel forklift truck in the preferred embodiment, the present invention is applicable to a four-wheel forklift truck.

An industrial vehicle includes a vehicle body, an electric component and a counterweight. The electric component of the industrial vehicle is mounted on the vehicle body. The counterweight is mounted on the vehicle body at the rear end and rearward of the electric component. The counterweight has a recess formed extending forwardly of the vehicle body from the rear end surface of the counterweight and an air passage formed extending upwardly of the vehicle body toward the electric component from an opening formed at the top surface of the recess. The recess has a closed end at a position forward of the opening of the air passage.

## Claims

1. An industrial vehicle comprising;
a vehicle body (1);
an electric component (13) of the industrial vehicle mounted on the vehicle body (1); and
a counterweight (10) mounted on the vehicle body (1) at the rear end and rearward of the electric component (13),
**characterized in that** the counterweight (10) has a recess (20) extending forwardly of the vehicle body (1) from the rear end surface of the counterweight (10) and an air passage (30) extending upwardly of the vehicle body (1) toward the electric component (13) from an opening (30A) formed at the top surface (20A) of the recess (20), and the recess (20) has a closed end (20B) at a position forward of the opening (30A) of the air passage (30).

2. The industrial vehicle according to claim 1, wherein the rear end surface of the counterweight (10) is formed extending vertically of the vehicle body (1), and the recess (20) of the counterweight (10) is formed extending horizontally of the vehicle body (1) from the center of the rear end surface of the counterweight (10).

3. The industrial vehicle according to claim 1 or 2, wherein the top surface (20A) of the recess (20) is formed extending horizontally of the vehicle body (1), and the opening (30A) of the air passage (30) is formed at the middle of the top surface (20A) of the recess (20) in the front-and-rear direction of the vehicle body (1).

4. The industrial vehicle according to any one of claims 1 through 3, wherein the air passage (30) is formed through the counterweight (10) extending forwardly of the vehicle body (1) from the opening (30A).

5. The industrial vehicle according to any one of claims 1 through 4, wherein the top surface (10A) of the counterweight (10) is slanted downward of the vehicle body (1) toward the rear of the industrial vehicle.

6. The industrial vehicle according to any one of claims 1 through 5, wherein a cap (11) is mounted to the counterweight (10) at the top of the counterweight (10) so as to seal the counterweight (10).

7. The industrial vehicle according to any one of claims 1 through 6, wherein a space (10D) is formed between the electric component (13) and the counterweight (10).

8. The industrial vehicle according to any one of claims 1 through 7, wherein a drawbar (12) for engaging a hook is arranged in the counterweight (10).

9. The industrial vehicle according to claim 8, wherein a hole (10C) is formed through the counterweight (10) extending downwardly of the vehicle body (1) from the top surface (10A) of the counterweight (10), and the drawbar (12) is suspended in the hole (10C) with the top portion of the drawbar (12) engaged with the top surface (10A) of the counterweight (10).

10. The industrial vehicle according to claim 9, wherein the hole (10C) is in communication with the recess (20) through the opening (30A) of the air passage (30).
